# EUROPEAN PATENT APPLICATION

(11) **EP 4 546 909 A1**
(43) Date of publication of application: **30.04.2025**
(21) Application number: 22947330.1
(22) Date of filing: 23.06.2022
(51) Int. Cl.: H04W 72/04, H04L 5/00

(54) **TCI STATE INDICATION METHOD AND APPARATUS, DEVICE AND MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns
(86) International application number: PCT/CN2022/100827
(87) International publication number: WO 2023/245559

(57) **Abstract**

A TCI state indication method and apparatus, a device and a medium. The method is executed by a terminal (1600), and comprises: receiving first indication information (220), the first indication information being used for indicating a first TCI state, the first TCI state comprising N TCI states, and the TCI states comprising joint TCI states and/or downlink TCI states, wherein N is an integer greater than 1; and receiving second indication information (240), the second indication information being used for indicating a second TCI state used during the receiving of a first physical downlink shared channel (PDSCH), and the second TCI state comprising M TCI states, wherein the M TCI states are a subset of the N TCI states, and M is a positive integer not greater than N. According to the method, additional indication information is provided for the PDSCH, so that the transmission flexibility of the PDSCH is improved.

## Description

### TECHNICAL FIELD

The present disclosure generally relates to a field of communication technology, and more particularly to a method and an apparatus for indicating a transmission configuration indication (TCI) state, a device and a medium.

### BACKGROUND

In the field of communication technology, in order to reduce a signaling overhead, a unified transmission configuration indicator (unified TCI state) is introduced for use. For example, if a base station indicates a unified TCI state for downlink, the TCI state may be applicable to a physical downlink shared channel (PDSCH), a physical downlink control channel (PDCCH) and some downlink reference signals of a terminal. If the base station indicates a unified TCI state for uplink, the TCI state may be applicable to a physical uplink shared channel (PUSCH), a physical uplink control channel (PUCCH) and some uplink reference signals of the terminal.

In the related art, the unified TCI state may be separately indicated for downlink and uplink, or be indicated jointly for downlink and uplink. That is, if the base station indicates a TCI state for downlink, the TCI state may be applicable to the PDSCH, the PDCCH, and some channel state information reference signals (CSI-RSs) of the terminal. If the base station indicates a TCI state for uplink, the TCI state may be applicable to the PUSCH, the PUCCH, and some sounding reference signals (SRSs) of the terminal. If the base station indicates a joint TCI state, the joint TCI state may be applicable to both an uplink channel/reference signal and a downlink channel/reference signal.

However, the related art is only applicable to a case of a single transmission reception point (S-TRP).

### SUMMARY

Embodiments of the present disclosure provide a method and an apparatus for indicating a TCI state, a device and a medium, which may flexibly indicate a TCI state used by a PDSCH when performing a multi transmission reception point (M-TRP) transmission, and may realize a dynamic switching of the M-TRP transmission and an S-TRP transmission of the PDSCH. The technical solution will be described as follows.

According to a first aspect of the present disclosure, a method for indicating a TCI state is provided, which is performed by a terminal and includes: receiving first indication information, in which the first indication information is configured to indicate a first TCI state, the first TCI state includes N TCI states, and the TCI state includes a joint TCI state and/or a downlink TCI state, in which N is an integer greater than 1; and receiving second indication information, in which the second indication information is configured to indicate a second TCI state used in a case that a first physical downlink shared channel (PDSCH) is received, and the second TCI state includes M TCI states. The M TCI states are a subset of the N TCI states, and M is a positive integer not greater than N.

According to a second aspect of the present disclosure, a method for indicating a TCI state is provided, which is performed by an access network device and includes: sending first indication information, in which the first indication information is configured to indicate a first TCI state, the first TCI state includes N TCI states, and the TCI state includes a joint TCI state and/or a downlink TCI state, in which N is an integer greater than 1; and sending second indication information, in which the second indication information is configured to indicate a second TCI state used in a case that a first physical downlink shared channel (PDSCH) is received, and the second TCI state includes M TCI states. The M TCI states are a subset of the N TCI states, and M is a positive integer not greater than N.

According to a third aspect of the present disclosure, an apparatus for indicating a TCI state is provided, which includes: a first receiving module configured to receive first indication information, in which the first indication information is configured to indicate a first TCI state, the first TCI state includes N TCI states, and the TCI state includes a joint TCI state and/or a downlink TCI state, in which N is an integer greater than 1; and a second receiving module configured to receive second indication information, in which the second indication information is configured to indicate a second TCI state used in a case that a first physical downlink shared channel (PDSCH) is received, and the second TCI state includes M TCI states. The M TCI states are a subset of the N TCI states, and M is a positive integer not greater than N.

According to a fourth aspect of the present disclosure, an apparatus for indicating a TCI state is provided, which includes: a first sending module configured to send first indication information, in which the first indication information is configured to indicate a first TCI state, the first TCI state includes N TCI states, and the TCI state includes a joint TCI state and/or a downlink TCI state, in which N is an integer greater than 1; and a second sending module configured to send second indication information, in which the second indication information is configured to indicate a second TCI state used in a case that a first physical downlink shared channel (PDSCH) is received, and the second TCI state includes M TCI states. The M TCI states are a subset of the N TCI states, and M is a positive integer not greater than N.

According to a fifth aspect of embodiments of the present disclosure, a terminal is provided, including: a processor; a transceiver connected to the processor; and a memory used to store instructions executable by the processor, in which the processor is configured to load and execute the executable instructions to cause the terminal to implement the method for indicating the TCI state according to any one of the above aspects.

According to a sixth aspect of embodiments of the present disclosure, an access network device is provided, including: a processor; a transceiver connected to the processor; and a memory used to store instructions executable by the processor, in which the processor is configured to load and execute the executable instructions to cause the access network device to implement the method for indicating the TCI state according to any one of the above aspects.

According to a seventh aspect of embodiments of the present disclosure, a chip is provided, and a communication device equipped with the chip is configured to implement the method for indicating the TCI state according to any one of the above aspects.

According to an eighth aspect of embodiments of the present disclosure, a computer-readable storage medium is provided, storing at least one instruction, at least one program, a code set or an instruction set stored thereon, in which the at least one instruction, the at least one program, the code set or the instruction set is loaded and executed by a processor to cause a communication device to implement the above method for indicating the TCI state.

The technical solution provided by the embodiments of the present disclosure at least has the following beneficial effects.

This solution may realize a dynamic switching between the M-TRP transmission and the S-TRP transmission of the PDSCH via the second indication information during the M-TRP transmission, so as to improve a transmission flexibility of the PDSCH.

### BRIEF DESCRIPTION OF THE DRAWINGS

In order to clearly illustrate technical solutions of embodiments of the present disclosure, a brief description of drawings used in embodiments is given below. Obviously, the drawings in the following descriptions are only part embodiments of the present disclosure, and for those skilled in the art, other drawings may be obtained according to these drawings without creative labor.
FIG. 1 is a schematic diagram of a communication system according to an illustrative embodiment.
FIG. 2 is a flow chart of a method for indicating a TCI state according to an illustrative embodiment.
FIG. 3 is a flow chart of a method for indicating a TCI state according to an illustrative embodiment.
FIG. 4 is a block diagram of an apparatus for indicating a TCI state according to an illustrative embodiment.
FIG. 5 is a block diagram of an apparatus for indicating a TCI state according to an illustrative embodiment.
FIG. 6 is a schematic diagram of a terminal according to an illustrative embodiment.
FIG. 7 is a schematic diagram of a network device according to an illustrative embodiment.

### DETAILED DESCRIPTION

Reference will now be made in detail to illustrative embodiments, examples of which are illustrated in the accompanying drawings. When the following description refers to the accompanying drawings, the same numbers in different drawings represent the same or similar elements unless otherwise represented. The implementations set forth in the following description of illustrative embodiments do not represent all implementations consistent with the present disclosure. Instead, they are merely examples of devices and methods consistent with some aspects of the present disclosure as recited in the appended claims.

The network architecture and service scenarios described in embodiments of the present disclosure are intended to more clearly illustrate the technical solution of embodiments of the present disclosure, and do not constitute a limitation on the technical solution according to embodiments of the present disclosure. Those skilled in the art may understand that, with the evolution of the network architecture and the emergence of new service scenarios, the technical solution according to the embodiments of the present disclosure is also applicable to similar technical problems.

First, several terms according to the embodiments of the present disclosure are briefly introduced.

TCI state: it is used to inform a terminal that quasi co-location (QCL) information or a spatial reception parameter (spatial Rx parameter) used when receiving a PDCCH/PDSCH and/or a DMRS thereof are the same as those used when receiving which reference signal (a synchronization signal block, (SSB) or a channel state information reference signal (CSI-RS)) sent by a base station; or inform the terminal that QCL information or spatial relationship information or a spatial filter used when sending a PUCCH/PUSCH and/or a DMRS thereof are the same as those used when sending which reference signal (such as a SRS or a CSI-RS).

Unified TCI state: if a base station indicates a unified TCI state for downlink, the TCI state may be applicable to a PDSCH, a PDCCH and some downlink reference signals of a terminal; if the base station indicates a unified TCI state for uplink, the TCI state may be applicable to indicate a PUSCH, a PUCCH and some uplink reference signals of the terminal. At present, the unified TCI state may adopt a separate indication of a separate uplink TCI state and a separate downlink TCI state, or a joint indication of an uplink-downlink joint TCI state.

The separate uplink TCI state is applicable to an uplink channel and/or signal, the separate downlink TCI state is applicable to a downlink channel and/or signal, and the joint TCI state is applicable to both the uplink channel and/or signal and the downlink channel and/or signal.

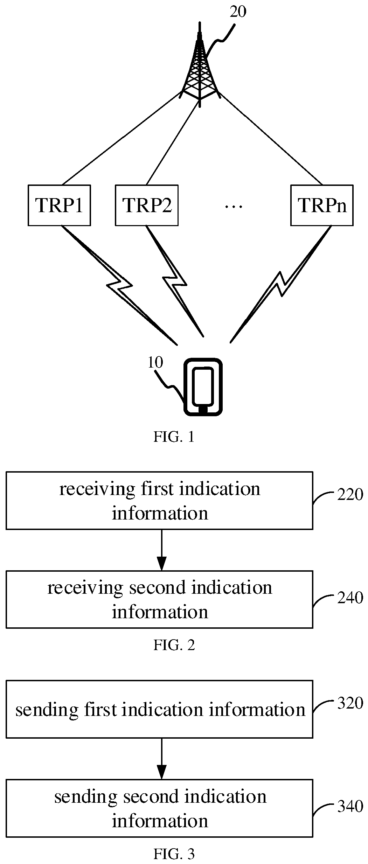

FIG. 1 shows a schematic diagram of a communication system according to an embodiment of the present disclosure. The communication system may include a terminal 10 and an access network device 20.

A plurality of terminals 10 usually may be provided, and one or more terminals 10 may be distributed in a cell managed by each access network device 20. The terminal 10 may include a variety of handheld devices, vehicle-mounted devices, wearable devices, computing devices or other processing devices connected to wireless modems, which have a wireless communication function, and various forms of user equipment (UE), mobile stations (MSs), etc. For a convenient description, the devices mentioned above in embodiments of the present disclosure are collectively referred to as a terminal.

The access network device 20 is an apparatus deployed in an access network that provides a wireless communication function for the terminal 10. The access network device 20 may include various forms of macro base stations, micro base stations, relay stations, and access points. In systems adopting different wireless access technologies, a name of a device that has the function of the access network device may be different, such as gNodeB or gNB in the 5G NR system. As the communication technology evolves, the name "access network device" may change. For a convenient description, in the embodiments of the present disclosure, the above apparatuses that provide the wireless communication function for the terminal 10 are collectively referred to as an access network device. A connection may be established between the access network device 20 and the terminal 10 via an air interface for communication, including a signaling interaction and a data interaction. A plurality of access network devices 20 may be provided, and two adjacent access network devices 20 may also communicate with each other in a wired or wireless manner. The terminal 10 may switch between different access network devices 20, that is, establishing a connection with different access network devices 20.

Optionally, the access network device 20 is provided with at least two TRPs; or, at least two access network devices 20 are provided, each of which is provided with at least one TRP, that is, the at least two access network devices 20 are provided with at least two TRPs. That is, the at least two TRPs may come from a same cell or different cells. A communication connection is established between the terminal 10 and the at least two TRPs by a downlink TCI state and/or an uplink TCI state. Optionally, different TRPs use different downlink TCI states and/or uplink TCI states. For example, the terminal 10 determines a downlink TCI state required to receive the PDCCH according to a joint TCI state or the downlink TCI state; and the terminal 10 determines an uplink TCI state required to send the PUSCH according to the joint TCI state or the uplink TCI state.

The "5G NR system" in the embodiments of the present disclosure may also be referred to as a 5G system or an NR system, which may be understood by those skilled in the art. The technical solution in the embodiments of the present disclosure may be applicable to the 5G NR system, and may also be applicable to a subsequent evolution system of the 5G NR system.

In a new radio (NR) technology, especially when a communication frequency band is in frequency range 2, since a high-frequency channel attenuates in a fast speed, it is required to use beam-based transmission and reception to ensure a coverage area.

FIG. 2 shows a flow chart of a method for indicating a TCI state according to an embodiment of the present disclosure. The method may be performed by the terminal in the communication system shown in FIG. 1. The method includes the following steps.

In step 220, first indication information is received.

The terminal receives the first indication information sent by the access network device.

The first indication information is configured to indicate a first TCI state, the first TCI state includes N TCI states, and the TCI state includes a joint TCI state and/or a downlink TCI state, in which N is an integer greater than 1. That is, the first indication information is configured to indicate information of a plurality of joint/downlink TCI states. That is, the first indication information is configured to indicate a unified TCI state of a downlink channel and/or signal. Each of the N TCI states may be the joint TCI state or the downlink TCI state.

In some embodiments, the first indication information is carried in a first medium access control control element (MAC CE), and the first MAC CE is configured to indicate the N TCI states. The N TCI states correspond to one code point in a TCI field of downlink control information (DCI). That is, the first indication information is only carried in the first MAC CE. Since the N TCI states indicated in the first MAC CE only correspond to one code point in the TCI field of the DCI, a base station does not need to send additional DCI to the terminal to indicate the code point, thereby saving a signaling overhead.

In some embodiments, the first indication information is carried in a second MAC CE and a first DCI, the second MAC CE is configured to indicate N TCI states corresponding to each of at least two code points, and the first DCI is configured to indicate one code point of the at least two code points. That is, both the second MAC CE and the first DCI are configured to indicate the first indication information. The second MAC CE indicates N TCI states corresponding to each of at least two code points in a TCI field of the first DCI. The first DCI is configured to indicate the code point, and then the N TCI states corresponding to the code point are obtained by querying the second MAC CE. In this case, the second MAC CE may indicate a plurality of sets of code point configurations, and each set of code point configurations corresponds to N TCI states. It should be noted that each code point corresponds to N TCI states, and a value of N corresponding to each code point may be the same or different.

In some embodiments, the first indication information further includes identification information (ID) corresponding to each TCI state, and the identification information includes a control resource set pool index (CORESETPoolIndex) or a CORESET group ID or an SS set group ID or a PDCCH group ID or a PDSCH group ID; or, the first indication information includes the N TCI states, and each of the N TCI states has a default mapping relationship with identification information.

That is, in an case, each of the N TCI states has the default mapping relationship with the identification information, and the first indication information does not need to additionally indicate a corresponding relationship between the TCI state and the identification information. In another case, no default mapping relationship exists between the TCI state and the identification information, and thus the first indication information also includes the corresponding relationship between each TCI state and the identification information.

In step 240, second indication information is received.

The second indication information is configured to indicate a second TCI state used in a case that a first PDSCH is received. The second TCI state includes M TCI states, the M TCI states are a subset of the N TCI states, and M is a positive integer not greater than N. That is, the M TCI states are the same as the N TCI states, or the M TCI states are a proper subset of the N TCI states; that is, the M TCI states are all or part of the N TCI states. Each of the M TCI states may be the joint TCI state or the downlink TCI state.

In some embodiments, the first PDSCH is configured with at least one of: a transmission scheme based on a frequency division multiplexing (FDM); a transmission scheme based on a time division multiplexing (TDM); the number of repetitions; demodulation reference signal (DMRS) ports of at least two code division multiplexing (CDM) groups; and a transmission scheme based on a single-frequency network (SFN).

Optionally, the transmission scheme based on the FDM includes: FDM scheme A; or FDM scheme B. FDM scheme A means that the terminal uses different TCI states to receive one PDSCH occasion of a transport block (TB) on non-overlapping frequency domain resources, in a case that the terminal is indicated with a plurality of TCI states. FDM scheme B means that the terminal uses different TCI states to respectively receive a plurality of PDSCH occasions of a TB on non-overlapping frequency domain resources, in a case that the terminal is indicated with a plurality of TCI states. In an illustrative case of FDM scheme B, the number of the TCI states and the number of the PDSCH occasions are both 2.

Optionally, the transmission scheme based on the TDM includes TDM scheme A. That is, in a case that the terminal is indicated with a plurality of TCI states, the terminal uses different TCI states to respectively receive a plurality of PDSCH occasions of a TB on non-overlapping time domain resources, and the plurality of PDSCH occasions are in one time slot. In an illustrative case of TDM scheme A, the number of the TCI states and the number of the PDSCH occasions are both 2.

Optionally, DMRS ports for transmitting the PDSCH corresponds to at least two CDM groups, and TCI states corresponding to the at least two CDM groups are different.

Optionally, the transmission scheme based on the SFN includes SFN scheme A or SFN scheme B. In the SFN scheme, a TCI state for transmitting the PDSCH includes at least two TCI states, and each TCI state includes a joint TCI state or a downlink TCI state. The SFN transmission may be also dynamically switched to an S-TRP transmission in a case that a reception of the first PDSCH is configured as the transmission scheme based on the SFN. That is, in a case that the number of the TCI states is greater than 1, it is an SFN-based transmission, otherwise, it is dynamically switched to the S-TRP transmission. Optionally, time domain resources and frequency domain resources for transmitting the PDSCH are the same, and the demodulation reference signal (DMRS) ports for transmitting the PDSCH are the same.

For example, in SFN scheme A, in a case that at least two TCI states are indicated, the terminal assumes that the DMRS ports for transmitting the PDSCH are quasi-co-located with downlink reference signals of the at least two TCI states; and in SFN scheme B, in a case that at least two TCI states are indicated, the terminal assumes that the DMRS ports for transmitting the PDSCH are quasi-co-located with downlink reference signals of the at least two TCI states, except for quasi co-location parameters {Doppler shift, Doppler spread} of the second TCI state:.

In some embodiments, in a case that M is equal to 1, it is the S-TRP transmission state.

In some embodiments, in a case that M is greater than 1, that is, in a M-TRP transmission state, different frequency domain resources of the first PDSCH correspond to different TCI states in a case that the first PDSCH is configured with the transmission scheme based on the FDM and M is greater than 1; different time domain resources of the first PDSCH correspond to different TCI states in a case that the first PDSCH is configured with the transmission scheme based on the TDM and M is greater than 1; the DMRS ports of different CDM groups of the first PDSCH corresponds to different TCI states in a case that the first PDSCH is configured with the DMRS ports of the at least two CDM groups and M is greater than 1; and DMRS ports of the first PDSCH correspond to the M TCI states in a case that the first PDSCH is configured with the transmission scheme based on the SFN and M is greater than 1.

That is, in the M-TRP transmission state, different time domain resources/frequency domain resources/ DMRS ports of CDM groups correspond to different TCI states; or, in the SFN scheme, under the same time domain resources/frequency domain resources, the DMRS ports correspond to a plurality of TCI states.

In some embodiments, the second indication information is carried in a third MAC CE. The third MAC CE is the same as or different from an MAC CE where the first indication information is located. The MAC CE where the first indication information is located includes the first MAC CE or the second MAC CE. That is, the third MAC CE is the same as or different from the first MAC CE in a case that the first indication information is carried in the first MAC CE; or, the third MAC CE is the same as or different from the second MAC CE in a case that the first indication information is carried in the second MAC CE and the first DCI.

In some embodiments, the third MAC CE is configured to indicate both the N TCI states (content of the first indication information) and the M TCI states (content of the second indication information) in a case that the third MAC CE is the same as an MAC CE carrying the first indication information. Optionally, the third MAC CE is further configured to indicate the corresponding relationship between the identification information and the N TCI states (optional content of the first indication information) and/or the corresponding relationship between the identification information and the M TCI states (optional content of the second indication information). The identification information is the CORESETPoolIndex or the CORESET group ID or the SS set group ID or the PDCCH group ID or the PDSCH group ID. For example, the third MAC CE is a unified TCI state activation/deactivation MAC CE, and the third MAC CE is configured to indicate both the first indication information and the second indication information.

That is, in a case that the third MAC CE is the same as the MAC CE carrying the first indication information, information carried in the same MAC CE includes the content included in the first indication information and the content included in the second indication information. That is, the third MAC CE includes not only information related to indicating the N TCI states, but also information related to indicating the M TCI states.

The information related the N TCI states includes at least one of the N TCI states and the identification information corresponding to each TCI state; and the information related to the M TCI states includes at least one of the M TCI states, the CORESET corresponding to each SS set, the identification information or TCI state corresponding to each SS set or each CORESET, the identification information corresponding to the first PDSCH, and the corresponding relationship between the identification information and the M TCI states. Information included in the third MAC CE is any combination of the above information related to the N TCI states and the above information related to the M TCI states.

In some embodiments, the second indication information is carried in a second DCI, and the second DCI is the same as or different from a DCI where the first indication information is located. That is, the second DCI and the first DCI may be the same or different in a case that the first indication information is carried in the second MAC CE and the first DCI.

For example, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with a downlink assignment, and the second DCI is a DCI in the DCI format of 1_1 or 1_2 without the downlink assignment; or, the first indication information is carried in a DCI in a DCI format of 1_1 or 1_2 without a downlink assignment, and the second DCI is a DCI in the DCI format of 1_1 or 1_2 with the downlink assignment; or, the first indication information is carried in a DCI in a DCI format of 1_1 or 1_2 with a downlink assignment, and the second DCI is the DCI in the DCI format of 1_1 or 1_2 with the downlink assignment; or, the first indication information is carried in a DCI in a DCI format of 1_1 or 1_2 with or without a downlink assignment, and the second DCI is a DCI in a DCI format other than 1_1 and 1_2.

For example, in a case that a DCI where the second indication information is located is a DCI without the downlink assignment, a field used by the second indication information in the DCI in the DCI format of 1_1 or 1_2 without the downlink assignment includes at least one of:
a frequency domain resource assignment (FDRA);
a time domain resource assignment (TDRA);
a virtual resource block to physical resource block mapping (VRB-to-PRB mapping);
a PRB bundling size indicator;
a rate matching indicator;
a non-zero power channel state information reference signal (CSI-RS) triggering;
a hybrid automatic repeat request (HARQ) process number;
a downlink assignment index;
a transmit power control command (TPC) for a scheduled PUCCH;
a second TPC command for a scheduled PUCCH;
a PUCCH resource indicator;
a timing indicator from a physical downlink shared channel (PDSCH) to an HARQ feedback (PDSCH-to-HARQ feedback timing indicator);
a one-shot hybrid automatic repeat request acknowledgement (HARQ-ACK) request;
an enhanced type 3 codebook indicator;
a PDSCH group index;
a new feedback indicator;
the number of requested PDSCH groups;
an HARQ-ACK retransmission indicator;
an antenna port;
a sounding reference signal (SRS) request;
an SRS offset indicator;
code block group (CBG) transmission information;
CBG flushing out information (CBGFI);
a demodulation reference signal (DMRS) sequence initialization;
a priority indicator;
a channel access-cyclic prefix;
a minimum applicable scheduling offset indicator;
a secondary cell (SCell) dormancy indication;
a PDCCH monitoring adaptation indication;
a physical uplink control channel (PUCCH) cell indicator;
a redundancy version;
a TCI state indication field;
an enhanced TCI state indication field; and
a newly added TCI state indication field: a second TCI state indication field.

In another case, in a case that a DCI where the second indication information is located is a DCI with the downlink assignment, a field used by the second indication information in the DCI in the DCI format of 1_1 or 1_2 with the downlink assignment includes at least one of:
a frequency domain resource assignment;
a time domain resource assignment;
a virtual resource block to physical resource block mapping;
a physical resource block bundling size indicator;
a rate matching indicator;
a non-zero power CSI-RS triggering;
an HARQ process number;
a downlink assignment index;
a transmit power control command for a scheduled PUCCH;
a second transmit power control command for a scheduled PUCCH;
a PUCCH resource indicator;
a timing indicator from a PDSCH to an HARQ feedback;
a one-shot HARQ-ACK request;
an enhanced type 3 codebook indicator;
a PDSCH group index;
a new feedback indicator;
the number of requested PDSCH groups;
an HARQ-ACK retransmission indicator;
an antenna port;
a sounding reference signal request;
an SRS offset indicator;
CBG transmission information;
CBG flushing out information;
a DMRS sequence initialization;
a priority indicator;
a channel access cyclic prefix (CP);
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a newly added TCI state indication field: a second TCI state indication field.

In some embodiments, the second indication information is in the DCI in the DCI format of 1_1 or 1_2 with the downlink assignment, and the second indication information uses at least a portion of bits or at least a portion of code points of an existing information field.

For example, an existing information field used by the second indication information occupies 3 bits at most. The existing information occupies the first 2 bits of the 3 bits, and the second indication information occupies the last 1 bit of the 3 bits.

For example, at most 6 bits may be used in a TDRA field. In a case that the TDRA needs to indicate the time domain resource assignment and the number of the bits required for the time domain resource assignment is 4 (less than 6 bits), the remaining 2 bits in the TDRA field except for the 4 bits occupied by the time domain resource assignment may be configured to indicate the second indication information.

Optionally, the field used by the second indication information may be the existing information field, or a combination of an existing information field and a newly added information field. That is, in a case that the second indication information needs to use 3 bits, the 3 bits may be 3 bits corresponding to the existing information field; or, the 3 bits include a combination of x bits corresponding to the existing information field and y bits corresponding to the newly added information field, in which x+y=3, x>1, y>1; or, the 3 bits include 3 bits corresponding to the newly added information field.

For example, the field used by the second indication information is the TCI state indication field (at most 3 bits in the traditional case), or the enhanced TCI state indication field (enhanced to be greater than 3 bits), or the newly added second TCI state indication field (at least 1 bit).

In some embodiments, the second indication information is in the DCI in the DCI format of 1_1 or 1_2 with the downlink assignment, and the existing information field is configured to indicate a combination of existing information and the second indication information.

For example, a communication protocol predefines a table, which includes at least one row of the existing information and the second indication information. As shown in Table 1 below, each row of the existing information and the second indication information forms a combination of the existing information and the second indication information, and individual rows are indicated by different code points. For example, code point 00 indicates a first row in the table, which is a combination of existing information 1 and second indication information 1. The bits in the existing information field are configured to indicate a code point in the table. By searching a corresponding row in the table through the code point, a combination of the existing information and the second indication information may be determined. For example, the existing information field is the TDRA.

**Table 1**

| code points | existing information | second indication information |
|---|---|---|
| 00 | existing information 1 | second indication information 1 |
| 01 | existing information 2 | second indication information 2 |
| 10 | existing information 3 | second indication information 3 |
| 11 | existing information 4 | second indication information 4 |

In some embodiments, the second indication information is in the DCI in the DCI format of 1_1 or 1_2 without the downlink assignment, and the second indication information uses at least a portion of bits of the existing information field. That is, in a case that the field used by the second indication information does not need to indicate information related to the downlink assignment, all or part of the bits in the field are configured to indicate the second indication information.

For example, the existing information field occupies 3 bits. In a case that the existing information field does not need to indicate the information related to the downlink assignment in this downlink assignment, all the 3 bits or at least one bit in the field may be used to indicate the second indication information.

For example, the above existing information field includes at least one of:
a frequency domain resource assignment;
a time domain resource assignment;
a virtual resource block to physical resource block mapping;
a physical resource block bundling size indicator;
a rate matching indicator;
a non-zero power CSI-RS triggering;
an HARQ process number;
a downlink assignment index;
a transmit power control command for a scheduled PUCCH;
a second transmit power control command for a scheduled PUCCH;
a PUCCH resource indicator;
a timing indicator from a PDSCH to an HARQ feedback;
a one-shot HARQ-ACK request;
an enhanced type 3 codebook indicator;
a PDSCH group index;
a new feedback indicator;
the number of requested PDSCH groups;
an HARQ-ACK retransmission indicator;
an antenna port;
a sounding reference signal request;
an SRS offset indicator;
CBG transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version; and
a TCI state indication field.

In some embodiments, without the downlink assignment in the DCI, the DCI has a following field configuration. Individual bits of a redundancy version (RV) field are set to "1", individual bits of a modulation and coding scheme (MCS) field are set to "1", and a new data indicator (NDI) is set to "0". In addition, individual bits of FDRA type 0 are set to "0"; or, individual bits of FDRA type 1 are set to "1"; or, individual bits of a dynamic switch field are set to "0".

In another case, that is, a SS set type associated with the second DCI is a user equipment (UE) specific SS set or a common SS set, in a case that the second DCI is the DCI in the DCI format other than 1_1 and 1_2.

In some embodiments, other possible cases of the positions of the first indication information and the second indication information include: the first indication information is carried in the MAC CE, and the second indication information is carried in the DCI; or, the first indication information is carried in the DCI, and the second indication information is carried in the MAC CE.

It should be noted that updates of the first indication information and the second indication information are independent. That is, possible cases of information updates include: the first indication information remains unchanged, and the second indication information changes; or, the first indication information changes, and the second indication information remains unchanged; or, both the first indication information and the second indication information changes.

It should be noted that the second indication information may be sent a plurality of times, and the information indicated each time is independent. For example, the second indication information indicates the M-TRP transmission state in an i-th time of transmission, and indicates the S-TRP transmission state in (i+1)-th time of transmission, in which i is a positive integer. The present disclosure is not limited to this.

In some embodiments, the second indication information is further configured to indicate a third TCI state of at least one channel, and the at least one channel includes at least one of: a physical uplink control channel (PUCCH); a physical uplink shared channel (PUSCH); and a physical downlink control channel (PDCCH). That is, the third TCI state is the same as the second TCI state; or, in a case that the second TCI state includes a downlink TCI state and the at least one channel is the PUCCH or the PUSCH, the third TCI state includes an uplink TCI state corresponding to the downlink TCI state.

In some embodiments, an MAC CE or a DCI where the second indication information is located is further configured to indicate a third TCI state of at least one channel, and the at least one channel includes at least one of: a physical uplink control channel (PUCCH); a physical uplink shared channel (PUSCH); and a physical downlink control channel (PDCCH).

Furthermore, the third TCI state is a subset of the first TCI state in a case that the at least one channel includes the PDCCH; in a case that the at least one channel includes the PUCCH or the PUSCH, the first TCI state includes N joint TCI states and/or uplink TCI states, and the third TCI state is a subset of the N joint TCI states and/or uplink TCI states. That is, the third TCI state is the same as the first TCI state; or, the third TCI state is a proper subset of the first TCI state, or, the third TCI state is a proper subset of the N joint TCI states and/or uplink TCI states.

Furthermore, the second indication information further indicates a PUCCH resource index.

In some embodiments, the second indication information includes at least one bandwidth part identity (BWP ID) and/or at least one component carrier identity (CC ID).

Furthermore, in a case that the CC ID is a CC ID in a CC list, the second TCI state is applicable to all BWPs on all CCs in the CC list. That is, the BWP ID may be ignored. The CC list is a list configured by the base station.

In some embodiments, at least one BWP ID and/or at least one CC ID corresponding to the second TCI state indicated by the second indication information are the same as a BWP ID and/or a CC ID corresponding to the N TCI states indicated by the first indication information.

In summary, in a case that the terminal receives the first indication information configured to indicate a plurality of sets of TCI states, the terminal then receives the second indication information configured to indicate the TCI states used in a case that the PDSCH is received, thereby realizing a dynamic switching between the multi transmission reception point transmission state and the single transmission reception point transmission state, and improving a transmission flexibility of the PDSCH based on the unified TCI state.

FIG. 3 shows a flow chart of a method for indicating a TCI state according to an embodiment of the present disclosure. The method may be performed by the access network device in the communication system shown in FIG. 1. The method includes the following steps.

In step 320, first indication information is sent.

The access network device sends the first indication information to the terminal.

The first indication information is configured to indicate a first TCI state, the first TCI state includes N TCI states, and the TCI state includes a joint TCI state and/or a downlink TCI state, in which N is an integer greater than 1. That is, the first indication information is configured to indicate information of a plurality of joint/downlink TCI states. That is, the first indication information is configured to indicate a unified TCI state of a downlink channel and/or signal. Each of the N TCI states may be the joint TCI state or the downlink TCI state.

In some embodiments, the first indication information is carried in a first medium access control control element (MAC CE), and the first MAC CE is configured to indicate the N TCI states.

In some embodiments, the first indication information is carried in a second MAC CE and a first DCI, the second MAC CE is configured to indicate N TCI states corresponding to each of at least two code points, and the first DCI is configured to indicate one code point of the at least two code points.

In some embodiments, the first indication information further includes identification information (ID) corresponding to each TCI state, and the identification information includes a CORESETPoolIndex or a CORESET group ID or a SS set group ID or a PDCCH group ID or a PDSCH group ID; or, the first indication information includes the N TCI states, and each of the N TCI states has a default mapping relationship with identification information.

The access network device sends the first indication information to the terminal. For the relevant introduction of the first indication information, reference may be made to the descriptions of the above step 220, which will not be repeated here.

In step 340, second indication information is sent.

The second indication information is configured to indicate a second TCI state used in a case that a first PDSCH is received. The second TCI state includes M TCI states, and the M TCI states are a subset of the N TCI states, and M is a positive integer not greater than N. That is, the M TCI states are the same as the N TCI states, or the M TCI states are a proper subset of the N TCI states; that is, the M TCI states are all or part of the N TCI states. Each of the M TCI states may be the joint TCI state or the downlink TCI state.

In some embodiments, the first PDSCH is configured with at least one of: a transmission scheme based on an FDM; a transmission scheme based on a TDM; the number of repetitions; DMRS ports of at least two CDM groups; and a transmission scheme based on an SFN.

Optionally, the transmission scheme based on the FDM includes: FDM scheme A; or FDM scheme B.

Optionally, the transmission scheme based on the TDM includes: TDM scheme A.

Optionally, DMRS ports for transmitting the PDSCH corresponds to at least two CDM groups, and TCI states corresponding to the at least two CDM groups are different.

Optionally, the transmission scheme based on the SFN includes: SFN scheme A; or SFN scheme B.

In some embodiments, in a case that M is equal to 1, it is an S-TRP transmission state.

In some embodiments, in a case that M is greater than 1, that is, in an M-TRP transmission state, different frequency domain resources of the first PDSCH correspond to different TCI states in a case that the first PDSCH is configured with the transmission scheme based on the FDM and M is greater than 1; different time domain resources of the first PDSCH correspond to different TCI states in a case that the first PDSCH is configured with the transmission scheme based on the TDM and M is greater than 1; the DMRS ports of different CDM groups of the first PDSCH corresponds to different TCI states in a case that the first PDSCH is configured with the DMRS ports of the at least two CDM groups and M is greater than 1; and DMRS ports of the first PDSCH correspond to the M TCI states in a case that the first PDSCH is configured with the transmission scheme based on the SFN and M is greater than 1.

In some embodiments, the second indication information is carried in a third MAC CE. The third MAC CE is the same as or different from an MAC CE where the first indication information is located. The MAC CE where the first indication information is located includes the first MAC CE or the second MAC CE.

In some embodiments, the third MAC CE is configured to indicate both the N TCI states (content of the first indication information) and the M TCI states (content of the second indication information) in a case that the third MAC CE is the same as an MAC CE carrying the first indication information.

For example, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with a downlink assignment, and the second DCI is a DCI in the DCI format of 1_1 or 1_2 without the downlink assignment; or, the first indication information is carried in a DCI in a DCI format of 1_1 or 1_2 without a downlink assignment, and the second DCI is a DCI in the DCI format of 1_1 or 1_2 with the downlink assignment; or, the first indication information is carried in a DCI in a DCI format of 1_1 or 1_2 with a downlink assignment, and the second DCI is the DCI in the DCI format of 1_1 or 1_2 with the downlink assignment; or, the first indication information is carried in a DCI in a DCI format of 1_1 or 1_2 with or without a downlink assignment, and the second DCI is a DCI in a DCI format other than 1_1 and 1_2.

For example, in a case that a DCI where the second indication information is located is a DCI without the downlink assignment, a field used by the second indication information in the DCI in the DCI format of 1_1 or 1_2 without the downlink assignment includes at least one of:
a frequency domain resource assignment;
a time domain resource assignment;
a virtual resource block to physical resource block mapping;
a PRB bundling size indicator;
a rate matching indicator;
a non-zero power CSI-RS triggering;
an HARQ process number;
a downlink assignment index;
a transmit power control command for a scheduled PUCCH;
a second transmit power control command for a scheduled PUCCH;
a PUCCH resource indicator;
a timing indicator from a PDSCH to an HARQ feedback;
a one-shot HARQ-ACK request;
an enhanced type 3 codebook indicator;
a PDSCH group index;
a new feedback indicator;
the number of requested PDSCH groups;
an HARQ-ACK retransmission indicator;
an antenna port;
a sounding reference signal request;
an SRS offset indicator;
CBG transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a newly added TCI state indication field: a second TCI state indication field.

In another case, in a case that a DCI where the second indication information is located is a DCI with the downlink assignment, a field used by the second indication information in the DCI in the DCI format of 1_1 or 1_2 with the downlink assignment includes at least one of:
a frequency domain resource assignment;
a time domain resource assignment;
a virtual resource block to physical resource block mapping;
a physical resource block bundling size indicator;
a rate matching indicator;
a non-zero power CSI-RS triggering;
an HARQ process number;
a downlink assignment index;
a transmit power control command for a scheduled PUCCH;
a second transmit power control command for a scheduled PUCCH;
a PUCCH resource indicator;
a timing indicator from a PDSCH to an HARQ feedback;
a one-shot HARQ-ACK request;
an enhanced type 3 codebook indicator;
a PDSCH group index;
a new feedback indicator;
the number of requested PDSCH groups;
an HARQ-ACK retransmission indicator;
an antenna port;
a sounding reference signal request;
an SRS offset indicator;
CBG transmission information;
CBG flushing out information;
a DMRS sequence initialization;
a priority indicator;
a channel access (CP);
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a newly added TCI state indication field: a second TCI state indication field.

In some embodiments, the second indication information is in the DCI in the DCI format of 1_1 or 1_2 with the downlink assignment, and the second indication information uses at least a portion of bits or at least a portion of code points of an existing information field.

Optionally, the field used by the second indication information may be the existing information field, or a combination of the existing information field and a newly added information field.

In some embodiments, the second indication information is in the DCI in the DCI format of 1_1 or 1_2 with the downlink assignment, and the existing information field is configured to indicate a combination of the existing information and the second indication information.

In some embodiments, the second indication information is in the DCI in the DCI format of 1_1 or 1_2 without the downlink assignment, and the second indication information uses at least a portion of bits of the existing information field.

For example, the above existing information field includes at least one of:
a frequency domain resource assignment;
a time domain resource assignment;
a virtual resource block to physical resource block mapping;
a physical resource block bundling size indicator;
a rate matching indicator;
a non-zero power CSI-RS triggering;
an HARQ process number;
a downlink assignment index;
a transmit power control command for a scheduled PUCCH;
a second transmit power control command for a scheduled PUCCH;
a PUCCH resource indicator;
a timing indicator from a PDSCH to an HARQ feedback;
a one-shot HARQ-ACK request;
an enhanced type 3 codebook indicator;
a PDSCH group index;
a new feedback indicator;
the number of requested PDSCH groups;
an HARQ-ACK retransmission indicator;
an antenna port;
a sounding reference signal request;
an SRS offset indicator;
CBG transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version; and
a TCI state indication field.

In another case, that is, a SS set type associated with the second DCI is a user equipment (UE) specific SS set or a common SS set in a case that the second DCI is the DCI in the DCI format other than 1_1 and 1_2.

In some embodiments, other possible cases of the positions of the first indication information and the second indication information include: the first indication information is carried in the MAC CE, and the second indication information is carried in the DCI; or, the first indication information is carried in the DCI, and the second indication information is carried in the MAC CE.

It should be noted that updates of the first indication information and the second indication information are independent. That is, possible cases of information updates include: the first indication information remains unchanged, and the second indication information changes; or, the first indication information changes, and the second indication information remains unchanged; or, both the first indication information and the second indication information changes.

It should be noted that the second indication information may be sent a plurality of times, and the information indicated each time is independent. For example, the second indication information indicates an M-TRP transmission state in an i-th time of transmission, and indicates an S-TRP transmission state in a (i+1)-th time of transmission, in which i is a positive integer. The present disclosure is not limited to this.

In some embodiments, the second indication information is further configured to indicate a third TCI state of at least one channel, and the at least one channel includes at least one of: a physical uplink control channel (PUCCH); a physical uplink shared channel (PUSCH); and a physical downlink control channel (PDCCH). That is, the third TCI state is the same as the second TCI state; or, in a case that the second TCI state includes a downlink TCI state and the at least one channel is the PUCCH or the PUSCH, the third TCI state includes an uplink TCI state corresponding to the downlink TCI state.

In some embodiments, an MAC CE or a DCI where the second indication information is located is further configured to indicate a third TCI state of at least one channel, and the at least one channel includes at least one of: a physical uplink control channel (PUCCH); a physical uplink shared channel (PUSCH); and a physical downlink control channel (PDCCH).

Furthermore, the third TCI state is a subset of the first TCI state in a case that the at least one channel includes the PDCCH; in a case that the at least one channel includes the PUCCH or the PUSCH, the first TCI state includes N joint TCI states and/or uplink TCI states, and the third TCI state is a subset of the N joint TCI states and/or uplink TCI states.

Furthermore, the second indication information further indicates a PUCCH resource index.

In a possible embodiment, the second indication information includes at least one BWP ID and/or at least one CC ID.

Furthermore, in a case that the CC ID is a CC ID in a CC list, the second TCI state is applicable to all BWPs on all CCs in the CC list. That is, the BWP ID may be ignored. The CC list is a list configured by the base station.

In some embodiments, at least one BWP ID and/or at least one CC ID corresponding to the second TCI state indicated by the second indication information are the same as a BWP ID and/or a CC ID corresponding to the N TCI states indicated by the first indication information.

The access network device sends the second indication information to the terminal. For the relevant introduction of the second indication information, reference may be made to the descriptions of the above step 240, which will not be repeated here.

In summary, in a case that the access network device sends the first indication information configured to indicate a plurality of sets of TCI states to the terminal, the access network device then sends to the terminal the second indication information configured to indicate the TCI state used in a case that the PDSCH is received, thereby realizing a dynamic switching of the PDSCH channel between the multi transmission reception point transmission state and the single transmission reception point transmission state, and improving a transmission flexibility of the PDSCH based on the unified TCI state.

It should be noted that the embodiments of the present disclosure include a plurality of optional steps, and each step includes at least one embodiment. Each step may be an independent embodiment; or, each step may be divided into a plurality of embodiments; or, a plurality of steps may constitute one embodiment. For example, the above step 240 may constitute one embodiment alone; or, the step 240 may also be divided into a plurality of embodiments in the above multiple possible embodiments, and so on. The present disclosure does not make any specific limitation to this.

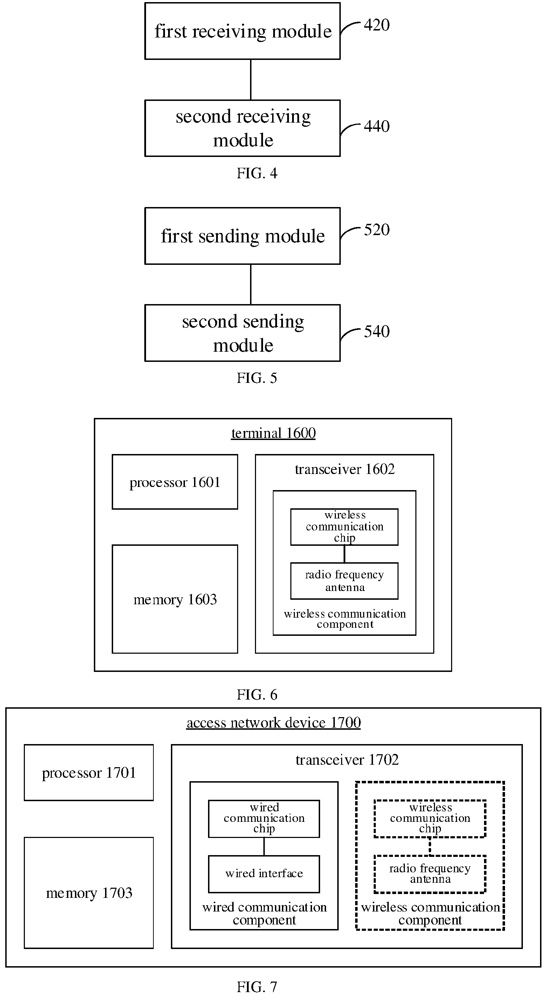

FIG. 4 is a block diagram of an apparatus for indicating a TCI state according to an illustrative embodiment of the present disclosure. As shown in FIG. 4, the apparatus includes:
a first receiving module 420 configured to receive first indication information, in which the first indication information is configured to indicate a first TCI state, the first TCI state includes N TCI states, and the TCI state includes a joint TCI state and/or a downlink TCI state, in which N is an integer greater than 1; and
a second receiving module 440 configured to receive second indication information, in which the second indication information is configured to indicate a second TCI state used in a case that a first physical downlink shared channel (PDSCH) is received, and the second TCI state includes M TCI states.

The M TCI states are a subset of the N TCI states, and M is a positive integer not greater than N.

In a possible design, the first PDSCH is configured with at least one of: a transmission scheme based on a frequency division multiplexing (FDM); a transmission scheme based on a time division multiplexing (TDM); the number of repetitions; demodulation reference signal (DMRS) ports of at least two code division multiplexing (CDM) groups; and a transmission scheme based on a single-frequency network (SFN).

In a possible design, the transmission scheme based on the frequency division multiplexing (FDM) includes: FDM scheme A; or FDM scheme B.

In a possible design, the transmission scheme based on the single-frequency network (SFN) includes: SFN scheme A; or SFN scheme B.

In a possible design, different frequency domain resources of the first PDSCH correspond to different TCI states in a case that the first PDSCH is configured with the transmission scheme based on the FDM and M is greater than 1; different time domain resources of the first PDSCH correspond to different TCI states in a case that the first PDSCH is configured with the transmission scheme based on the TDM and M is greater than 1; DMRS ports of different CDM groups of the first PDSCH corresponds to different TCI states in a case that the first PDSCH is configured with the demodulation reference signal (DMRS) ports of the at least two code division multiplexing (CDM) groups and M is greater than 1; and DMRS ports of the first PDSCH correspond to the M TCI states in a case that the first PDSCH is configured with the transmission scheme based on the SFN and M is greater than 1.

In a possible design, the first indication information is carried in a first medium access control control element (MAC CE), and the first MAC CE is configured to indicate the N TCI states; or, the first indication information is carried in a second MAC CE and first downlink control information (DCI), the second MAC CE is configured to indicate N TCI states corresponding to each of at least two code points, and the first DCI is configured to indicate one code point of the at least two code points.

In a possible design, the first indication information includes identification information (ID) corresponding to each TCI state, and the identification information includes a CORESETPoolIndex or a CORESET group ID or a SS set group ID or a PDCCH group ID or a PDSCH group ID; or, the first indication information includes the N TCI states, and each of the N TCI states has a default mapping relationship with identification information.

In a possible design, the second indication information is carried in a third MAC CE, and the third MAC CE is the same as or different from an MAC CE where the first indication information is located.

In a possible design, the third MAC CE is configured to indicate the N TCI states and the M TCI states in a case that the third MAC CE is the same as the MAC CE where the first indication information is located.

In a possible design, the second indication information is carried in a second DCI, and the second DCI is the same as or different from a DCI where the first indication information is located.

In a possible design, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with a downlink assignment, and the second DCI is a DCI in the DCI format of 1_1 or 1_2 without the downlink assignment; or, the first indication information is carried in a DCI in a DCI format of 1_1 or 1_2 without a downlink assignment, and the second DCI is a DCI in the DCI format of 1_1 or 1_2 with the downlink assignment; or, the first indication information is carried in a DCI in a DCI format of 1_1 or 1_2 with a downlink assignment, and the second DCI is the DCI in the DCI format of 1_1 or 1_2 with the downlink assignment; or, the first indication information is carried in a DCI in a DCI format of 1_1 or 1_2 with or without a downlink assignment, and the second DCI is a DCI in a DCI format other than 1_1 and 1_2.

In a possible design, a field used by the second indication information in the DCI in the DCI format of 1_1 or 1_2 without the downlink assignment includes at least one of: a frequency domain resource assignment; a time domain resource assignment; a virtual resource block to physical resource block mapping; a physical resource block bundling size indicator; a rate matching indicator; a non-zero power channel state information reference signal (CSI-RS) triggering; a hybrid automatic repeat request (HARQ) process number; a downlink assignment index; a transmit power control command for a scheduled physical uplink control channel (PUCCH); a second transmit power control command for a scheduled PUCCH; a PUCCH resource indicator; a timing indicator from a physical downlink shared channel (PDSCH) to an HARQ feedback; a one-shot hybrid automatic repeat request acknowledgement (HARQ-ACK) request; an enhanced type 3 codebook indicator; a PDSCH group index; a new feedback indicator; the number of requested PDSCH groups; an HARQ-ACK retransmission indicator; an antenna port; a sounding reference signal (SRS) request; an SRS offset indicator; code block group (CBG) transmission information; CBG flushing out information; a demodulation reference signal (DMRS) sequence initialization; a priority indicator; a channel access-cyclic prefix (CP); a minimum applicable scheduling offset indicator; a secondary cell dormancy indication; a PDCCH monitoring adaptation indication; a physical uplink control channel (PUCCH) cell indicator; a redundancy version; a TCI state indication field; an enhanced TCI state indication field; and a second TCI state indication field.

In a possible design, a field used by the second indication information in the DCI in the DCI format of 1_1 or 1_2 with the downlink assignment includes at least one of: a frequency domain resource assignment; a time domain resource assignment; a virtual resource block to physical resource block mapping; a physical resource block bundling size indicator; a rate matching indicator; a non-zero power CSI-RS triggering; an HARQ process number; a downlink assignment index; a transmit power control command for a scheduled PUCCH; a second transmit power control command for a scheduled PUCCH; a PUCCH resource indicator; a timing indicator from a PDSCH to an HARQ feedback; a one-shot HARQ-ACK request; an enhanced type 3 codebook indicator; a PDSCH group index; a new feedback indicator; the number of requested PDSCH groups; an HARQ-ACK retransmission indicator; an antenna port; an SRS request; an SRS offset indicator; CBG transmission information; CBG flushing out information; a DMRS sequence initialization; a priority indicator; a channel access CP; a minimum applicable scheduling offset indicator; a secondary cell dormancy indication; a PDCCH monitoring adaptation indication; a PUCCH cell indicator; a redundancy version; a TCI state indication field; an enhanced TCI state indication field; and a second TCI state indication field.

In a possible design, the second indication information is in the DCI in the DCI format of 1_1 or 1_2 with the downlink assignment, and the second indication information uses at least a portion of bits or at least a portion of code points of an existing information field; or, the second indication information is in the DCI in the DCI format of 1_1 or 1_2 with the downlink assignment, and an existing information field is configured to indicate a combination of existing information and the second indication information; or, the second indication information is in the DCI in the DCI format of 1_1 or 1_2 without the downlink assignment, and the second indication information uses at least a portion of bits of an existing information field.

In a possible design, the existing information field includes at least one of: a frequency domain resource assignment; a time domain resource assignment; a virtual resource block to physical resource block mapping; a physical resource block bundling size indicator; a rate matching indicator; a non-zero power CSI-RS triggering; an HARQ process number; a downlink assignment index; a transmit power control command for a scheduled PUCCH; a second transmit power control command for a scheduled PUCCH; a PUCCH resource indicator; a timing indicator from a PDSCH to an HARQ feedback; a one-shot HARQ-ACK request; an enhanced type 3 codebook indicator; a PDSCH group index; a new feedback indicator; the number of requested PDSCH groups; an HARQ-ACK retransmission indicator; an antenna port; an SRS request; an SRS offset indicator; CBG transmission information; CBG flushing out information; a DMRS sequence initialization; a priority indicator; a channel access CP; a minimum applicable scheduling offset indicator; a secondary cell dormancy indication; a PDCCH monitoring adaptation indication; a PUCCH cell indicator; a redundancy version; and a TCI state indication field.

In a possible design, an SS set type associated with the second DCI is a user equipment specific SS set or a common SS set in a case that the second DCI is the DCI in the DCI format other than 1_1 and 1_2.

In a possible design, the second indication information is further configured to indicate a third TCI state of at least one channel, and the at least one channel includes at least one of: a physical uplink control channel (PUCCH); a physical uplink shared channel (PUSCH); and a physical downlink control channel (PDCCH). That is, the third TCI state is the same as the second TCI state; or, in a case that the second TCI state includes a downlink TCI state and the at least one channel is the PUCCH or the PUSCH, the third TCI state includes an uplink TCI state corresponding to the downlink TCI state.

In a possible design, an MAC CE or a DCI where the second indication information is located is further configured to indicate a third TCI state of at least one channel, and the at least one channel includes at least one of: a physical uplink control channel (PUCCH); a physical uplink shared channel (PUSCH); and a physical downlink control channel (PDCCH).

In a possible design, the third TCI state is a subset of the first TCI state in a case that the at least one channel includes the PDCCH; or, in a case that the at least one channel includes the PUCCH or the PUSCH, the first TCI state includes N joint TCI states and/or uplink TCI states, and the third TCI state is a subset of the N joint TCI states and/or uplink TCI states.

In a possible design, the second indication information includes at least one bandwidth part identity (BWP ID) and/or at least one component carrier identity (CC ID).

In a possible design, in a case that the CC ID is a CC ID in a CC list, the second TCI state is applicable to all BWPs on all CCs in the CC list.

In a possible design, at least one BWP ID and/or at least one CC ID corresponding to the second TCI state indicated by the second indication information are the same as a BWP ID and/or a CC ID corresponding to the N TCI states indicated by the first indication information.

FIG. 5 is a block diagram of an apparatus for indicating a TCI state according to an illustrative embodiment of the present disclosure. As shown in FIG. 5, the apparatus includes:
a first sending module 520 configured to send first indication information, in which the first indication information is configured to indicate a first TCI state, the first TCI state includes N TCI states, and the TCI state includes a joint TCI state and/or a downlink TCI state, in which N is an integer greater than 1; and
a second sending module 540 configured to send second indication information, in which the second indication information is configured to indicate a second TCI state used in a case that a first physical downlink shared channel (PDSCH) is received, and the second TCI state includes M TCI states.

The M TCI states are a subset of the N TCI states, and M is a positive integer not greater than N.

In a possible design, the first PDSCH is configured with at least one of: a transmission scheme based on a frequency division multiplexing (FDM); a transmission scheme based on a time division multiplexing (TDM); the number of repetitions; demodulation reference signal (DMRS) ports of at least two code division multiplexing (CDM) groups; and a transmission scheme based on a single-frequency network (SFN).

In a possible design, the transmission scheme based on the frequency division multiplexing (FDM) includes: FDM scheme A; or FDM scheme B.

In a possible design, the transmission scheme based on the single-frequency network (SFN) includes: SFN scheme A; or SFN scheme B.

In a possible design, different frequency domain resources of the first PDSCH correspond to different TCI states in a case that the first PDSCH is configured with the transmission scheme based on the FDM and M is greater than 1; different time domain resources of the first PDSCH correspond to different TCI states in a case that the first PDSCH is configured with the transmission scheme based on the TDM and M is greater than 1; DMRS ports of different CDM groups of the first PDSCH corresponds to different TCI states in a case that the first PDSCH is configured with the demodulation reference signal (DMRS) ports of the at least two code division multiplexing (CDM) groups and M is greater than 1; and DMRS ports of the first PDSCH correspond to the M TCI states in a case that the first PDSCH is configured with the transmission scheme based on the SFN and M is greater than 1.

In a possible design, the first indication information is carried in a first medium access control control element (MAC CE), and the first MAC CE is configured to indicate the N TCI states; or, the first indication information is carried in a second MAC CE and first downlink control information (DCI), the second MAC CE is configured to indicate N TCI states corresponding to each of at least two code points, and the first DCI is configured to indicate one code point of the at least two code points.

In a possible design, the first indication information includes identification information (ID) corresponding to each TCI state, and the identification information includes a CORESETPoolIndex or a CORESET group ID or a SS set group ID or a PDCCH group ID or a PDSCH group ID; or, the first indication information includes the N TCI states, and each of the N TCI states has a default mapping relationship with identification information.

In a possible design, the second indication information is carried in a third MAC CE, and the third MAC CE is the same as or different from an MAC CE where the first indication information is located.

In a possible design, the third MAC CE is configured to indicate the N TCI states and the M TCI states in a case that the third MAC CE is the same as the MAC CE where the first indication information is located.

In a possible design, the second indication information is carried in a second DCI, and the second DCI is the same as or different from a DCI where the first indication information is located.

In a possible design, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with a downlink assignment, and the second DCI is a DCI in the DCI format of 1_1 or 1_2 without the downlink assignment; or, the first indication information is carried in a DCI in a DCI format of 1_1 or 1_2 without a downlink assignment, and the second DCI is a DCI in the DCI format of 1_1 or 1_2 with the downlink assignment; or, the first indication information is carried in a DCI in a DCI format of 1_1 or 1_2 with a downlink assignment, and the second DCI is the DCI in the DCI format of 1_1 or 1_2 with the downlink assignment; or, the first indication information is carried in a DCI in a DCI format of 1_1 or 1_2 with or without a downlink assignment, and the second DCI is a DCI in a DCI format other than 1_1 and 1_2.

In a possible design, a field used by the second indication information in the DCI in the DCI format of 1_1 or 1_2 without the downlink assignment includes at least one of: a frequency domain resource assignment; a time domain resource assignment; a virtual resource block to physical resource block mapping; a physical resource block bundling size indicator; a rate matching indicator; a non-zero power channel state information reference signal (CSI-RS) triggering; a hybrid automatic repeat request (HARQ) process number; a downlink assignment index; a transmit power control command for a scheduled physical uplink control channel (PUCCH); a second transmit power control command for a scheduled PUCCH; a PUCCH resource indicator; a timing indicator from a physical downlink shared channel (PDSCH) to an HARQ feedback; a one-shot hybrid automatic repeat request acknowledgement (HARQ-ACK) request; an enhanced type 3 codebook indicator; a PDSCH group index; a new feedback indicator; the number of requested PDSCH groups; an HARQ-ACK retransmission indicator; an antenna port; a sounding reference signal (SRS) request; an SRS offset indicator; code block group (CBG) transmission information; CBG flushing out information; a demodulation reference signal (DMRS) sequence initialization; a priority indicator; a channel access-cyclic prefix (CP); a minimum applicable scheduling offset indicator; a secondary cell dormancy indication; a PDCCH monitoring adaptation indication; a physical uplink control channel (PUCCH) cell indicator; a redundancy version; a TCI state indication field; an enhanced TCI state indication field; and a second TCI state indication field.

In a possible design, a field used by the second indication information in the DCI in the DCI format of 1_1 or 1_2 with the downlink assignment includes at least one of: a frequency domain resource assignment; a time domain resource assignment; a virtual resource block to physical resource block mapping; a physical resource block bundling size indicator; a rate matching indicator; a non-zero power CSI-RS triggering; an HARQ process number; a downlink assignment index; a transmit power control command for a scheduled PUCCH; a second transmit power control command for a scheduled PUCCH; a PUCCH resource indicator; a timing indicator from a PDSCH to an HARQ feedback; a one-shot HARQ-ACK request; an enhanced type 3 codebook indicator; a PDSCH group index; a new feedback indicator; the number of requested PDSCH groups; an HARQ-ACK retransmission indicator; an antenna port; an SRS request; an SRS offset indicator; CBG transmission information; CBG flushing out information; a DMRS sequence initialization; a priority indicator; a channel access CP; a minimum applicable scheduling offset indicator; a secondary cell dormancy indication; a PDCCH monitoring adaptation indication; a PUCCH cell indicator; a redundancy version; a TCI state indication field; an enhanced TCI state indication field; and a second TCI state indication field.

In a possible design, the second indication information is in the DCI in the DCI format of 1_1 or 1_2 with the downlink assignment, and the second indication information uses at least a portion of bits or at least a portion of code points of an existing information field; or, the second indication information is in the DCI in the DCI format of 1_1 or 1_2 with the downlink assignment, and an existing information field is configured to indicate a combination of existing information and the second indication information; or, the second indication information is in the DCI in the DCI format of 1_1 or 1_2 without the downlink assignment, and the second indication information uses at least a portion of bits of an existing information field.

In a possible design, the existing information field includes at least one of: a frequency domain resource assignment; a time domain resource assignment; a virtual resource block to physical resource block mapping; a physical resource block bundling size indicator; a rate matching indicator; a non-zero power CSI-RS triggering; an HARQ process number; a downlink assignment index; a transmit power control command for a scheduled PUCCH; a second transmit power control command for a scheduled PUCCH; a PUCCH resource indicator; a timing indicator from a PDSCH to an HARQ feedback; a one-shot HARQ-ACK request; an enhanced type 3 codebook indicator; a PDSCH group index; a new feedback indicator; the number of requested PDSCH groups; an HARQ-ACK retransmission indicator; an antenna port; an SRS request; an SRS offset indicator; CBG transmission information; CBG flushing out information; a DMRS sequence initialization; a priority indicator; a channel access CP; a minimum applicable scheduling offset indicator; a secondary cell dormancy indication; a PDCCH monitoring adaptation indication; a PUCCH cell indicator; a redundancy version; and a TCI state indication field.

In a possible design, an SS set type associated with the second DCI is a user equipment specific SS set or a common SS set in a case that the second DCI is the DCI in the DCI format other than 1_1 and 1_2.

In a possible design, the second indication information is further configured to indicate a third TCI state of at least one channel, and the at least one channel includes at least one of: a physical uplink control channel (PUCCH); a physical uplink shared channel (PUSCH); and a physical downlink control channel (PDCCH). That is, the third TCI state is the same as the second TCI state; or, in a case that the second TCI state includes a downlink TCI state and the at least one channel is the PUCCH or the PUSCH, the third TCI state includes an uplink TCI state corresponding to the downlink TCI state.

In a possible design, an MAC CE or a DCI where the second indication information is located is further configured to indicate a third TCI state of at least one channel, and the at least one channel includes at least one of: a physical uplink control channel (PUCCH); a physical uplink shared channel (PUSCH); and a physical downlink control channel (PDCCH).

In a possible design, the third TCI state is a subset of the first TCI state in a case that the at least one channel includes the PDCCH; or, in a case that the at least one channel includes the PUCCH or the PUSCH, the first TCI state includes N joint TCI states and/or uplink TCI states, and the third TCI state is a subset of the N joint TCI states and/or uplink TCI states.

In a possible design, the second indication information includes at least one bandwidth part identity (BWP ID) and/or at least one component carrier identity (CC ID).

In a possible design, in a case that the CC ID is a CC ID in a CC list, the second TCI state is applicable to all BWPs on all CCs in the CC list.

In a possible design, at least one BWP ID and/or at least one CC ID corresponding to the second TCI state indicated by the second indication information are the same as a BWP ID and/or a CC ID corresponding to the N TCI states indicated by the first indication information.

FIG. 6 is a block diagram of a terminal 1600 according to an embodiment of the present disclosure. The terminal 1600 may include a processor 1601, a transceiver 1602 and a memory 1603.

The processor 1601 includes one or more processing cores. The processor 1601 executes various functional applications and information processing by running software programs and modules.

The transceiver 1602 may include a receiver and a transmitter, for example, the receiver and the transmitter may be the same wireless communication component, and the wireless communication component may include a wireless communication chip and a radio frequency antenna.

The memory 1603 may be connected to the processor 1601 and the transceiver 1602.

The memory 1603 may be configured to store a computer program executed by a processor, and the processor 1601 is configured to execute the computer program to implement individual steps executed by the terminal in the wireless communication system in the above method embodiments.

In addition, the memory 1603 may be implemented by any type of volatile or non-volatile storage device, or a combination thereof, including, but not limited to: a magnetic disk or an optical disc, an electrically-erasable programmable read-only memory, an erasable programmable read-only memory, a static random-access memory, a read-only memory, a magnetic memory, a flash memory, a programmable read-only memory.

The process performed by the transceiver 1602 may refer to individual steps performed by the terminal in the above methods.

FIG. 7 is a block diagram of an access network device 1700 according to an embodiment of the present disclosure. The network device 1700 may include a processor 1701, a transceiver 1702, and a memory 1703.

The processor 1701 includes one or more processing cores. The processor 1701 executes various functional applications and information processing by running software programs and modules.

The transceiver 1702 may include a receiver and a transmitter. For example, the transceiver 1702 may include a wired communication component, which may include a wired communication chip and a wired interface (such as a fiber interface). Optionally, the transceiver 1702 may also include a wireless communication component, and the wireless communication component may include a wireless communication chip and a radio frequency antenna.

The memory 1703 may be connected to the processor 1701 and the transceiver 1702.

The memory 1703 may be configured to store a computer program executed by a processor, and the processor 1701 is configured to execute the computer program to implement individual steps executed by the access network device in the wireless communication system in the above method embodiments.

In addition, the memory 1703 may be implemented by any type of volatile or non-volatile storage device, or a combination thereof, including, but not limited to: a magnetic disk or an optical disc, an electrically-erasable programmable read-only memory, an erasable programmable read-only memory, a static random-access memory, a read-only memory, a magnetic memory, a flash memory, a programmable read-only memory.

Embodiments of the present disclosure also provide a computer-readable storage medium having stored therein at least one instruction, at least one program, a code set or an instruction set. The at least one instruction, the at least one program, the code set or the instruction set is loaded and executed by a processor to cause a communication device to implement the method for indicating the TCI state as described above.

The present disclosure also provides a computer program product, which includes computer instructions stored in a computer-readable storage medium. The computer instructions are read by a processor of a computer device from the computer-readable storage medium and executed by the processor, so that the computer program product executes individual steps executed by the terminal or the access network device in the above methods.

The present disclosure also provides a chip, which is configured to run in a computer device, so that the computer device executes individual steps executed by the terminal or the access network device in the above methods.

The present disclosure also provides a computer program, which is executed by a processor of a computer device, and a network device equipped with the computer program implements individual steps executed by the terminal or the access network device in the above methods.

It should be understood by those skilled in the art, in one or more of the above examples, the functions described in the embodiments of the present disclosure may be realized by the hardware, software, firmware or any combination thereof. When they are realized by the hardware, these functions may be stored in computer-readable media or transmitted as one or more instructions or codes on computer-readable media. The computer-readable medium includes a computer storage medium and a communication medium, and the communication medium includes any medium facilitating a transmission of a computer program from one place to another. The storage medium may be a usable medium accessible to a general-purpose or special-purpose computer.

Terms used herein in the embodiments of the present disclosure are only for the purpose of describing specific embodiments, but should not be construed to limit the embodiments of the present disclosure. As used in the embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the terms "if" and "in response to" may be construed to mean "when" or "upon" or "in response to determining" depending on the context.

It should be understood that above embodiments of the present disclosure are just illustrative embodiments, and cannot be construed to limit the present disclosure. Any modification, equivalent replacement, improvement, etc. made within the spirit and principles of the present disclosure shall be included in the scope of protection of the present disclosure.

## Claims

1. A method for indicating a transmission configuration indication (TCI) state, performed by a terminal, and comprising:
receiving first indication information, wherein the first indication information is configured to indicate a first TCI state, the first TCI state comprises N TCI states, and the TCI state comprises a joint TCI state and/or a downlink TCI state, wherein N is an integer greater than 1; and
receiving second indication information, wherein the second indication information is configured to indicate a second TCI state used in a case that a first physical downlink shared channel (PDSCH) is received, and the second TCI state comprises M TCI states,
wherein the M TCI states are a subset of the N TCI states, and M is a positive integer not greater than N.

2. The method according to claim 1, wherein the first PDSCH is configured with at least one of:
a transmission scheme based on a frequency division multiplexing (FDM);
a transmission scheme based on a time division multiplexing (TDM);
a number of repetitions;
demodulation reference signal (DMRS) ports of at least two code division multiplexing (CDM) groups; and
a transmission scheme based on a single-frequency network (SFN).

3. The method according to claim 2, wherein the transmission scheme based on the frequency division multiplexing (FDM) comprises:
FDM scheme A; or
FDM scheme B.

4. The method according to claim 2, wherein the transmission scheme based on the single-frequency network (SFN) comprises:
SFN scheme A; or
SFN scheme B.

5. The method according to claim 2, wherein
different frequency domain resources of the first PDSCH correspond to different TCI states in a case that the first PDSCH is configured with the transmission scheme based on the FDM and M is greater than 1;
different time domain resources of the first PDSCH correspond to different TCI states in a case that the first PDSCH is configured with the transmission scheme based on the TDM and M is greater than 1;
DMRS ports of different CDM groups of the first PDSCH correspond to different TCI states in a case that the first PDSCH is configured with the demodulation reference signal (DMRS) ports of the at least two code division multiplexing (CDM) groups and M is greater than 1; and
DMRS ports of the first PDSCH correspond to the M TCI states in a case that the first PDSCH is configured with the transmission scheme based on the SFN and M is greater than 1.

6. The method according to claim 1, wherein
the first indication information is carried in a first medium access control control element (MAC CE), and the first MAC CE is configured to indicate the N TCI states; or
the first indication information is carried in a second MAC CE and first downlink control information (DCI), the second MAC CE is configured to indicate N TCI states corresponding to each of at least two code points, and the first DCI is configured to indicate one code point of the at least two code points.

7. The method according to claim 6, wherein
the first indication information comprises identification information (ID) corresponding to each TCI state, and the identification information comprises a CORESETPoolIndex or a CORESET group ID or a SS set group ID or a PDCCH group ID or a PDSCH group ID; or
the first indication information comprises the N TCI states, and each of the N TCI states has a default mapping relationship with identification information.

8. The method according to any one of claims 1 to 7, wherein
the second indication information is carried in a third MAC CE, and the third MAC CE is the same as or different from an MAC CE where the first indication information is located.

9. The method according to claim 8, wherein
the third MAC CE is configured to indicate the N TCI states and the M TCI states in a case that the third MAC CE is the same as the MAC CE where the first indication information is located.

10. The method according to any one of claims 1 to 7, wherein
the second indication information is carried in a second DCI, and the second DCI is the same as or different from a DCI where the first indication information is located.

11. The method according to claim 10, wherein
the first indication information is carried in a DCI in a DCI format of 1_1 or 1_2 without a downlink assignment, and the second DCI is the DCI in the DCI format of 1_1 or 1_2 without the downlink assignment; or
the first indication information is carried in a DCI in a DCI format of 1_1 or 1_2 with a downlink assignment, and the second DCI is a DCI in the DCI format of 1_1 or 1_2 without the downlink assignment; or
the first indication information is carried in a DCI in a DCI format of 1_1 or 1_2 without a downlink assignment, and the second DCI is a DCI in the DCI format of 1_1 or 1_2 with the downlink assignment; or
the first indication information is carried in a DCI in a DCI format of 1_1 or 1_2 with a downlink assignment, and the second DCI is a DCI in the DCI format of 1_1 or 1_2 with the downlink assignment; or
the first indication information is carried in a DCI in a DCI format of 1_1 or 1_2 with or without a downlink assignment, and the second DCI is a DCI in a DCI format other than 1_1 and 1_2.

12. The method according to claim 11, wherein
a field used by the second indication information in the DCI in the DCI format of 1_1 or 1_2 without the downlink assignment comprises at least one of:
a frequency domain resource assignment;
a time domain resource assignment;
a virtual resource block to physical resource block mapping;
a physical resource block bundling size indicator;
a rate matching indicator;
a non-zero power channel state information reference signal (CSI-RS) triggering;
a hybrid automatic repeat request (HARQ) process number;
a downlink assignment index;
a transmit power control command for a scheduled physical uplink control channel (PUCCH);
a second transmit power control command for a scheduled PUCCH;
a PUCCH resource indicator;
a timing indicator from a physical downlink shared channel (PDSCH) to an HARQ feedback;
a one-shot hybrid automatic repeat request acknowledgement (HARQ-ACK) request;
an enhanced type 3 codebook indicator;
a PDSCH group index;
a new feedback indicator;
a number of requested PDSCH groups;
an HARQ-ACK retransmission indicator;
an antenna port;
a sounding reference signal (SRS) request;
an SRS offset indicator;
code block group (CBG) transmission information;
CBG flushing out information;
a demodulation reference signal (DMRS) sequence initialization;
a priority indicator;
a channel access-cyclic prefix (CP);
a minimum applicable scheduling offset indicator;
a secondary cell dormancy indication;
a PDCCH monitoring adaptation indication;
a physical uplink control channel (PUCCH) cell indicator;
a redundancy version;
a TCI state indication field;
an enhanced TCI state indication field; and
a second TCI state indication field.

13. The method according to claim 11, wherein
a field used by the second indication information in the DCI in the DCI format of 1_1 or 1_2 with the downlink assignment comprises at least one of:
a frequency domain resource assignment;
a time domain resource assignment;
a virtual resource block to physical resource block mapping;
a physical resource block bundling size indicator;
a rate matching indicator;
a non-zero power CSI-RS triggering;
an HARQ process number;
a downlink assignment index;
a transmit power control command for a scheduled PUCCH;
a second transmit power control command for a scheduled PUCCH;
a PUCCH resource indicator;
a timing indicator from a PDSCH to an HARQ feedback;
a one-shot HARQ-ACK request;
an enhanced type 3 codebook indicator;
a PDSCH group index;
a new feedback indicator;
a number of requested PDSCH groups;
an HARQ-ACK retransmission indicator;
an antenna port;
an SRS request;
an SRS offset indicator;
CBG transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a second TCI state indication field.

14. The method according to claim 11, wherein
the second indication information is in the DCI in the DCI format of 1_1 or 1_2 with the downlink assignment, and the second indication information uses at least a portion of bits or at least a portion of code points of an existing information field; or
the second indication information is in the DCI in the DCI format of 1_1 or 1_2 with the downlink assignment, and an existing information field is configured to indicate a combination of existing information and the second indication information; or
the second indication information is in the DCI in the DCI format of 1_1 or 1_2 without the downlink assignment, and the second indication information uses at least a portion of bits of an existing information field.

15. The method according to claim 14, wherein the existing information field comprises at least one of:
a frequency domain resource assignment;
a time domain resource assignment;
a virtual resource block to physical resource block mapping;
a physical resource block bundling size indicator;
a rate matching indicator;
a non-zero power CSI-RS triggering;
an HARQ process number;
a downlink assignment index;
a transmit power control command for a scheduled PUCCH;
a second transmit power control command for a scheduled PUCCH;
a PUCCH resource indicator;
a timing indicator from a PDSCH to an HARQ feedback;
a one-shot HARQ-ACK request;
an enhanced type 3 codebook indicator;
a PDSCH group index;
a new feedback indicator;
a number of requested PDSCH groups;
an HARQ-ACK retransmission indicator;
an antenna port;
an SRS request;
an SRS offset indicator;
CBG transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version; and
a TCI state indication field.

16. The method according to claim 11, wherein
an SS set type associated with the second DCI is a user equipment specific SS set or a common SS set in a case that the second DCI is the DCI in the DCI format other than 1_1 and 1_2.

17. The method according to claim 1, wherein
an MAC CE or a DCI where the second indication information is located is further configured to indicate a third TCI state of at least one channel, and the at least one channel comprises at least one of:
a physical uplink control channel (PUCCH);
a physical uplink shared channel (PUSCH); and
a physical downlink control channel (PDCCH).

18. The method according to claim 17, wherein
the third TCI state is a subset of the first TCI state in a case that the at least one channel comprises the PDCCH; or
in a case that the at least one channel comprises the PUCCH or the PUSCH, the first TCI state comprises N joint TCI states and/or uplink TCI states, and the third TCI state is a subset of the N joint TCI states and/or uplink TCI states.

19. The method according to any one of claims 1 to 18, wherein
the second indication information comprises at least one bandwidth part identity (BWP ID) and/or at least one component carrier identity (CC ID).

20. The method according to claim 19, wherein
the second TCI state is applicable to all BWPs on all CCs in a CC list in a case that the CC ID is a CC ID in the CC list.

21. The method according to any one of claims 1 to 18, wherein
at least one BWP ID and/or at least one CC ID corresponding to the second TCI state indicated by the second indication information are the same as a BWP ID and/or a CC ID corresponding to the N TCI states indicated by the first indication information.

22. A method for indicating a transmission configuration indication (TCI) state, performed by an access network device, and comprising:
sending first indication information, wherein the first indication information is configured to indicate a first TCI state, the first TCI state comprises N TCI states, and the TCI state comprises a joint TCI state and/or a downlink TCI state, wherein N is an integer greater than 1; and
sending second indication information, wherein the second indication information is configured to indicate a second TCI state used in a case that a first physical downlink shared channel (PDSCH) is received, and the second TCI state comprises M TCI states,
wherein the M TCI states are a subset of the N TCI states, and M is a positive integer not greater than N.

23. The method according to claim 22, wherein the first PDSCH is configured with at least one of:
a transmission scheme based on a frequency division multiplexing (FDM);
a transmission scheme based on a time division multiplexing (TDM);
a number of repetitions;
demodulation reference signal (DMRS) ports of at least two code division multiplexing (CDM) groups; and
a transmission scheme based on a single-frequency network (SFN).

24. The method according to claim 23, wherein the transmission scheme based on the frequency division multiplexing (FDM) comprises:
FDM scheme A; or
FDM scheme B.

25. The method according to claim 23, wherein the transmission scheme based on the single-frequency network (SFN) comprises:
SFN scheme A; or
SFN scheme B.

26. The method according to claim 23, wherein
different frequency domain resources of the first PDSCH correspond to different TCI states in a case that the first PDSCH is configured with the transmission scheme based on the FDM and M is greater than 1;
different time domain resources of the first PDSCH correspond to different TCI states in a case that the first PDSCH is configured with the transmission scheme based on the TDM and M is greater than 1;
DMRS ports of different CDM groups of the first PDSCH correspond to different TCI states in a case that the first PDSCH is configured with the demodulation reference signal (DMRS) ports of the at least two code division multiplexing (CDM) groups and M is greater than 1; and
DMRS ports of the first PDSCH correspond to the M TCI states in a case that the first PDSCH is configured with the transmission scheme based on the SFN and M is greater than 1.

27. The method according to claim 22, wherein
the first indication information is carried in a first medium access control control element (MAC CE), and the first MAC CE is configured to indicate the N TCI states; or
the first indication information is carried in a second MAC CE and first downlink control information (DCI), the second MAC CE is configured to indicate N TCI states corresponding to each of at least two code points, and the first DCI is configured to indicate one code point of the at least two code points.

28. The method according to claim 27, wherein
the first indication information comprises identification information (ID) corresponding to each TCI state, and the identification information comprises a CORESETPoolIndex or a CORESET group ID or a SS set group ID or a PDCCH group ID or a PDSCH group ID; or
the first indication information comprises the N TCI states, and each of the N TCI states has a default mapping relationship with identification information.

29. The method according to any one of claims 22 to 28, wherein
the second indication information is carried in a third MAC CE, and the third MAC CE is the same as or different from an MAC CE where the first indication information is located.

30. The method according to claim 29, wherein
the third MAC CE is configured to indicate the N TCI states and the M TCI states in a case that the third MAC CE is the same as the MAC CE where the first indication information is located.

31. The method according to any one of claims 22 to 28, wherein
the second indication information is carried in a second DCI, and the second DCI is the same as or different from a DCI where the first indication information is located.

32. The method according to claim 31, wherein
the first indication information is carried in a DCI in a DCI format of 1_1 or 1_2 without a downlink assignment, and the second DCI is the DCI in the DCI format of 1_1 or 1_2 without the downlink assignment; or
the first indication information is carried in a DCI in a DCI format of 1_1 or 1_2 with a downlink assignment, and the second DCI is a DCI in the DCI format of 1_1 or 1_2 without the downlink assignment; or
the first indication information is carried in a DCI in a DCI format of 1_1 or 1_2 without a downlink assignment, and the second DCI is a DCI in the DCI format of 1_1 or 1_2 with the downlink assignment; or
the first indication information is carried in a DCI in a DCI format of 1_1 or 1_2 with a downlink assignment, and the second DCI is a DCI in the DCI format of 1_1 or 1_2 with the downlink assignment; or
the first indication information is carried in a DCI in a DCI format of 1_1 or 1_2 with or without a downlink assignment, and the second DCI is a DCI in a DCI format other than 1_1 and 1_2.

33. The method according to claim 32, wherein
a field used by the second indication information in the DCI in the DCI format of 1_1 or 1_2 without the downlink assignment comprises at least one of:
a frequency domain resource assignment;
a time domain resource assignment;
a virtual resource block to physical resource block mapping;
a physical resource block bundling size indicator;
a rate matching indicator;
a non-zero power channel state information reference signal (CSI-RS) triggering;
a hybrid automatic repeat request (HARQ) process number;
a downlink assignment index;
a transmit power control command for a scheduled physical uplink control channel (PUCCH);
a second transmit power control command for a scheduled PUCCH;
a PUCCH resource indicator;
a timing indicator from a physical downlink shared channel (PDSCH) to an HARQ feedback;
a one-shot hybrid automatic repeat request acknowledgement (HARQ-ACK) request;
an enhanced type 3 codebook indicator;
a PDSCH group index;
a new feedback indicator;
a number of requested PDSCH groups;
an HARQ-ACK retransmission indicator;
an antenna port;
a sounding reference signal (SRS) request;
an SRS offset indicator;
code block group (CBG) transmission information;
CBG flushing out information;
a demodulation reference signal (DMRS) sequence initialization;
a priority indicator;
a channel access-cyclic prefix (CP);
a minimum applicable scheduling offset indicator;
a secondary cell dormancy indication;
a PDCCH monitoring adaptation indication;
a physical uplink control channel (PUCCH) cell indicator;
a redundancy version;
a TCI state indication field;
an enhanced TCI state indication field; and
a second TCI state indication field.

34. The method according to claim 32, wherein
a field used by the second indication information in the DCI in the DCI format of 1_1 or 1_2 with the downlink assignment comprises at least one of:
a frequency domain resource assignment;
a time domain resource assignment;
a virtual resource block to physical resource block mapping;
a physical resource block bundling size indicator;
a rate matching indicator;
a non-zero power CSI-RS triggering;
an HARQ process number;
a downlink assignment index;
a transmit power control command for a scheduled PUCCH;
a second transmit power control command for a scheduled PUCCH;
a PUCCH resource indicator;
a timing indicator from a PDSCH to an HARQ feedback;
a one-shot HARQ-ACK request;
an enhanced type 3 codebook indicator;
a PDSCH group index;
a new feedback indicator;
a number of requested PDSCH groups;
an HARQ-ACK retransmission indicator;
an antenna port;
an SRS request;
an SRS offset indicator;
CBG transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a second TCI state indication field.

35. The method according to claim 32, wherein
the second indication information is in the DCI in the DCI format of 1_1 or 1_2 with the downlink assignment, and the second indication information uses at least a portion of bits or at least a portion of code points of an existing information field; or
the second indication information is in the DCI in the DCI format of 1_1 or 1_2 with the downlink assignment, and an existing information field is configured to indicate a combination of existing information and the second indication information; or
the second indication information is in the DCI in the DCI format of 1_1 or 1_2 without the downlink assignment, and the second indication information uses at least a portion of bits of an existing information field.

36. The method according to claim 35, wherein the existing information field comprises at least one of:
a frequency domain resource assignment;
a time domain resource assignment;
a virtual resource block to physical resource block mapping;
a physical resource block bundling size indicator;
a rate matching indicator;
a non-zero power CSI-RS triggering;
an HARQ process number;
a downlink assignment index;
a transmit power control command for a scheduled PUCCH;
a second transmit power control command for a scheduled PUCCH;
a PUCCH resource indicator;
a timing indicator from a PDSCH to an HARQ feedback;
a one-shot HARQ-ACK request;
an enhanced type 3 codebook indicator;
a PDSCH group index;
a new feedback indicator;
a number of requested PDSCH groups;
an HARQ-ACK retransmission indicator;
an antenna port;
an SRS request;
an SRS offset indicator;
CBG transmission information;
CBG flushing out information;
a DMRS sequence initialization;
a priority indicator;
a channel access CP;
a minimum applicable scheduling offset indicator;
a secondary cell dormancy indication;
a PDCCH monitoring adaptation indication;
a PUCCH cell indicator;
a redundancy version; and
a TCI state indication field.

37. The method according to claim 32, wherein
an SS set type associated with the second DCI is a user equipment specific SS set or a common SS set in a case that the second DCI is the DCI in the DCI format other than 1_1 and 1_2.

38. The method according to claim 22, wherein
an MAC CE or a DCI where the second indication information is located is further configured to indicate a third TCI state of at least one channel, and the at least one channel comprises at least one of:
a physical uplink control channel (PUCCH);
a physical uplink shared channel (PUSCH); and
a physical downlink control channel (PDCCH).

39. The method according to claim 37, wherein
the third TCI state is a subset of the first TCI state in a case that the at least one channel comprises the PDCCH; or
in a case that the at least one channel comprises the PUCCH or the PUSCH, the first TCI state comprises N joint TCI states and/or uplink TCI states, and the third TCI state is a subset of the N joint TCI states and/or uplink TCI states.

40. The method according to any one of claims 22 to 39, wherein
the second indication information comprises at least one bandwidth part identity (BWP ID) and/or at least one component carrier identity (CC ID).

41. The method according to claim 40, wherein
the second TCI state is applicable to all BWPs on all CCs in a CC list in a case that the CC ID is a CC ID in the CC list.

42. The method according to any one of claims 22 to 39, wherein
at least one BWP ID and/or at least one CC ID corresponding to the second TCI state indicated by the second indication information are the same as a BWP ID and/or a CC ID corresponding to the N TCI states indicated by the first indication information.

43. An apparatus for indicating a transmission configuration indication (TCI) state, comprising:
a first receiving module configured to receive first indication information, wherein the first indication information is configured to indicate a first TCI state, the first TCI state comprises N TCI states, and the TCI state comprises a joint TCI state and/or a downlink TCI state, wherein N is an integer greater than 1; and
a second receiving module configured to receive second indication information, wherein the second indication information is configured to indicate a second TCI state used in a case that a first physical downlink shared channel (PDSCH) is received, and the second TCI state comprises M TCI states,
wherein the M TCI states are a subset of the N TCI states, and M is a positive integer not greater than N.

44. An apparatus for indicating a transmission configuration indication (TCI) state, comprising:
a first sending module configured to send first indication information, wherein the first indication information is configured to indicate a first TCI state, the first TCI state comprises N TCI states, and the TCI state comprises a joint TCI state and/or a downlink TCI state, wherein N is an integer greater than 1; and
a second sending module configured to send second indication information, wherein the second indication information is configured to indicate a second TCI state used in a case that a first physical downlink shared channel (PDSCH) is received, and the second TCI state comprises M TCI states,
wherein the M TCI states are a subset of the N TCI states, and M is a positive integer not greater than N.

45. A terminal, comprising:
a processor; and
a transceiver connected to the processor,
wherein the processor is configured to load and execute executable instructions to implement a method for indicating a transmission configuration indication (TCI) state according to any one of claims 1 to 21.

46. An access network device, comprising:
a processor; and
a transceiver connected to the processor,
wherein the processor is configured to load and execute executable instructions to implement a method for indicating a transmission configuration indication (TCI) state according to any one of claims 22 to 42.

47. A computer-readable storage medium, storing at least one instruction, at least one program, a code set or an instruction set, wherein the at least one instruction, the at least one program, the code set or the instruction set is loaded and executed by a processor to implement a method for indicating a transmission configuration indication (TCI) state according to any one of claims 1 to 21, or, to implement a method for indicating a TCI state according to any one of claims 22 to 42.
